# EUROPÄISCHE PATENTSCHRIFT

(11) **EP 1 428 437 B1**
(45) Veröffentlichungstag und Bekanntmachung des Hinweises auf die Patenterteilung: **27.06.2007**
(21) Anmeldenummer: 03027665.3
(22) Anmeldetag: 03.12.2003
(51) Int. Cl.: A22C 11/02, A47J 42/56

(54) **Verschliessvorrichtung für wurstförmige Verpackungen und Darmbremsanordnung für eine solche**
Closure device for sausage casings and a casing brake mechanism
Fermeture pour l'embout de l'enveloppe d'une saucisse et organe de freinage pour boyau

(30) Priorität: 11.12.2002 CH 21092002
(43) Veröffentlichungstag der Anmeldung: 16.06.2004
(73) Patentinhaber: Tipper Tie Alpina AG, 9201 Gossau (CH)
(72) Erfinder: Pargätzi, Max, 9200 Gossau (CH)
(74) Vertreter: Blum, Rudolf Emil

(56) Entgegenhaltungen:
- EP-A- 1 074 180
- DE-A- 3 540 370
- DE-C- 3 608 777
- US-A- 5 197 914
- US-A1- 2002 042 247

## Beschreibung

Die Erfindung betrifft eine Verschliessvorrichtung zur Bildung wurstförmiger Verpackungen gemäss Oberbegriff des Anspruchs 1. Ferner betrifft die Erfindung eine Darmbremsanordnung gemäss Oberbegriff des Anspruchs 3 sowie eine Verschliessvorrichtung, die zur Kombination mit einer solchen Darmbremsanordnung bestimmt ist.

Verschliessvorrichtungen, sogenannte Clipmaschinen, sind bekannt, z.B. aus DE-A-40 13 033. Solche Vorrichtungen weisen ein Verdrängerscherenpaar auf. Die Verdrängerscheren schnüren die in offener Scherenposition in die Scheren eingeführte schlauchförmige Verpackung durch Schliessen der Scheren ein, wobei die beiden Scheren nebeneinander liegen (Raffvorgang). Nach der Einschnürung, bzw. dem Raffen, wird die eine Schere zur anderen, feststehenden Schere seitlich, bzw. in Längsrichtung der Verpackung versetzt, wodurch das in der Verpakkung enthaltene Produkt aus dem zwischen den Scheren liegenden Bereich verdrängt wird und somit ein produktfreier Bereich zwischen zwei Würsten geschaffen wird, in den nachfolgend durch die Verschliessvorrichtung der oder die Verschlussclips gesetzt wird bzw. werden. In der Regel werden zwei Clips gesetzt, nämlich der zweite Clip für die eine, vorlaufende Wurst und der erste Clip für die nachfolgende Wurst. Figur 1 zeigt schematisch eine solche Verschliessvorrichtung gemäss DE-A-40 13 033. Bevor die gefüllte schlauchförmige Verpackung als kontinuierlicher Strang in die feststehende Schere eintritt, passiert sie eine sogenannte Darmbremse, welche am Füllrohr der Wurstfüllmaschine wirksam ist. Auf dem Füllrohr ist die schlauchförmige Verpackungshülle (bei Würsten der "Darm", daher auch die Bezeichnung Darmbremse) in gefaltetem Zustand aufgezogen und am Ende des Füllrohres tritt das Produkt aus, mit welchem die schlauchförmige Verpackung gefüllt wird. Um diese dabei gegen den Fülldruck zurückzuhalten, so dass sich ein geordnetes Abziehen der schlauchförmigen Verpackung bzw. deren korrekte Füllung ergibt, weist die Darmbremse in der Regel eine oder zwei ringförmige Bremslippen auf, die am Ende des Füllrohres die schlauchförmige Verpackung beaufschlagen und deren Abziehen vom Füllrohr abbremsen. Die Darmbremse kann in Längsrichtung des Füllrohres verschiebbar sein, um die Bremskraft zu beeinflussen. Da die eigentliche Darmbremse mit der ringförmigen Bremslippe an den Füllrohrdurchmesser angepasst sein muss, ist sie auswechselbar in der Verschliessvorrichtung bzw. der Darmbremsanordnung angeordnet. DE-C-36 08 777 zeigt eine Vorrichtung mit der das Vorhandensein eines Vorrats von Wursthüllenmaterial auf dem Füllrohr einer Wurstfüllmaschine feststellbar ist. DE-A-35 40 370 zeigt eine Sicherheitsvorrichtung bei einem Küchengerät, mit der das Vorhandensein eines Behälters und dessen Deckels feststellbar ist.

Der Erfindung liegt die Aufgabe zugrunde eine Verschliessvorrichtung mit Darmbremse zu verbessern.

Dies wird bei der Verschliessvorrichtung der eingangs genannten Art mit den kennzeichnenden Merkmalen des Anspruchs 1 erreicht.

Dadurch, dass das Nichtvorhandensein der Darmbremse durch die Vorrichtung feststellbar ist und in diesem Falle deren Inbetriebsetzung verhindert wird, werden Fehlbedienungen durch ein Vergessen des Einsetzens der auswechselbaren Darmbremse sicher verhindert. Ferner kann eine Unfallursache vermieden werden, da die Darmbremse mit ihrem geringen Durchmesser ein versehentliches Hineingreifen in die Verdrängerscheren verhindert. Da die Vorrichtung ohne eingesetzte Darmbremse nicht in Betrieb setzbar ist, besteht also keine Verletzungsgefahr bei einem Hineingreifen in die Vorrichtung bei nicht eingesetzter Darmbremse.

Der Erfindung liegt weiter die Aufgabe zugrunde eine Darmbremsanordnung zu schaffen, die an eine Verschliessvorrichtung hinzufügbar ist und die genannten Vorteile ebenfalls aufweist.

Dies wird durch eine Darmbremsanordnung mit den kennzeichnenden Merkmalen des Anspruchs 3 erreicht bzw. mit einer Verschliessvorrichtung mit einer solchen Darmbremsanordnung.

Im folgenden wird eine Verschliessanordnung nach Stand der Technik und werden Ausführungsbeispiele gemäss der Erfindung anhand der Figuren näher erläutert. Dabei zeigt
Figur 1 eine Verschliessvorrichtung nach Stand der Technik;
Figur 2 eine Darmbremsanordnung gemäss der Erfindung in Ansicht von aussen; und
Figur 3 eine Vertikalschnittansicht der Darmbremsanordnung von Figur 2.

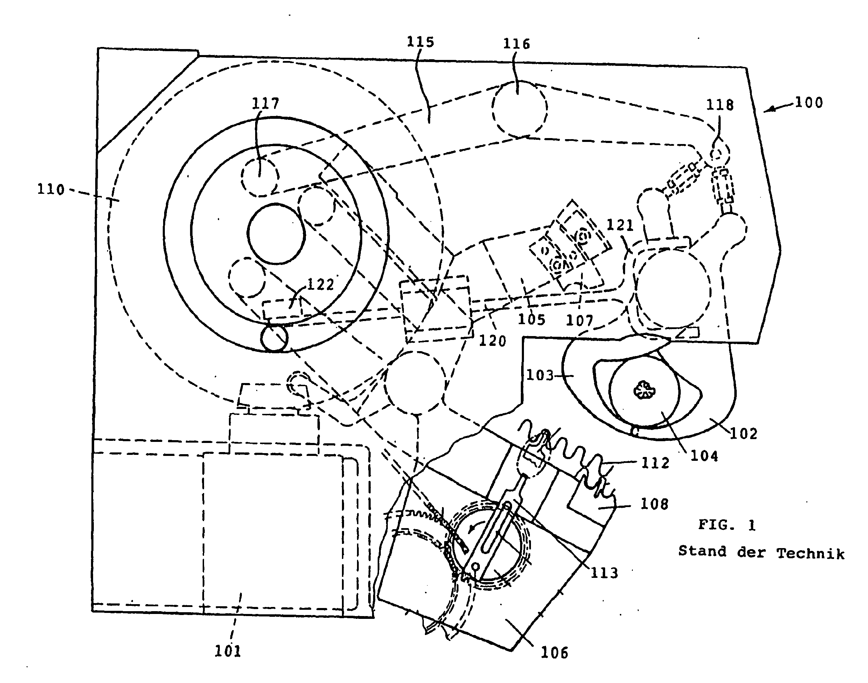

Figur 1 zeigt schematisch eine Verschliesseinrichtung 100 nach Stand der Technik für wurstförmige Verpackungen 104. Bekannterweise ist eine solche Verschlusseinrichtung mit einem Scherenpaar versehen, von welchem in der Figur nur eine Schere 102, 103 ersichtlich ist. Das Scherenpaar ist in einer ersten Stellung mit nahe benachbart nebeneinander liegenden Scheren angeordnet, welche in Offenstellung die wurstförmige Verpackung 104 in sich aufnehmen, wie in Figur 1 gezeigt. Hat die als kontinuierlicher Strang aus einer Wurstfüllmaschine austretende Packung eine vorbestimmte Länge bzw. ein vorbestimmtes Gewicht erreicht, so werden die Scheren geschlossen, wodurch sich ein Einschnüren der schlauchförmigen Packung ergibt, welches als Raffen bezeichnet wird. Danach wird die eine der beiden Scheren (die sichtbare Schere 102, 103) in Längsrichtung der schlauchförmigen Verpackung verschoben, wodurch das in der Verpackung enthaltene Produkt in dem zwischen den beiden Scheren liegenden Bereich verdrängt wird, so dass dort eine produktfreie Zone gebildet wird. In diese werden nun auf bekannte Weise Verschlussclips gesetzt, wobei in der Figur dazu ein Clipdraht 112 gezeigt ist, der durch einen Vorschubhebel 113 in eine Matrize 108 gefördert wird. Die am Unterarm 106 der Vorrichtung 100 angeordnete Matrize und der am Oberarm 105 angeordnete Stempel 107 schneiden bei der Verschliessbewegung jeweils einen Clip vom Clipdraht 112 ab und verschliessen diesen. Auf diese Weise werden im produktfreien Bereich in der Regel zwei Clips gesetzt, nämlich der Endclip der einen Wurst und der Anfangsclip für die nachfolgende Wurst. In Blickrichtung hinter dem Scherenpaar von Figur 1 befindet sich die Darmbremsanordnung bzw. die Darmbremse der Verschliessvorrichtung.

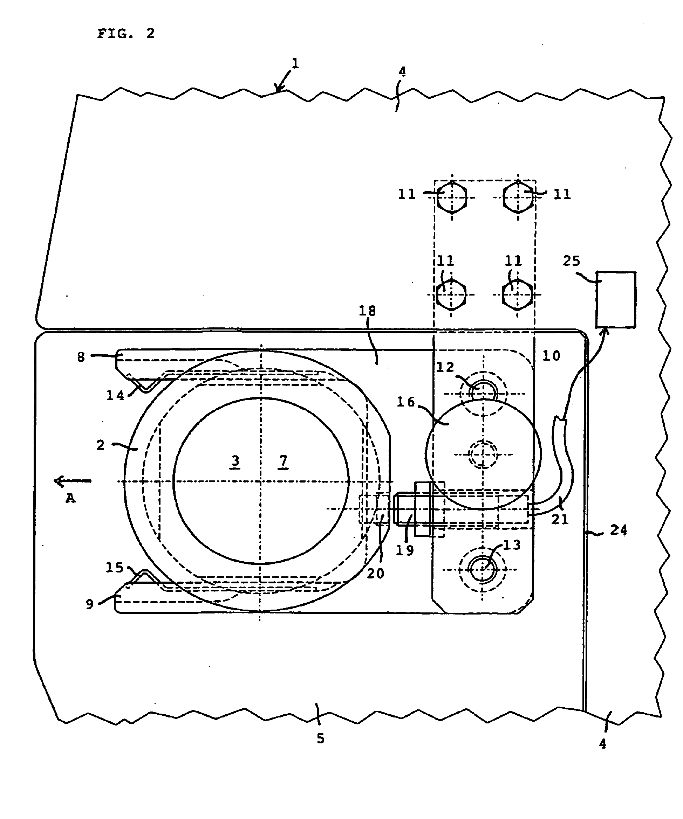

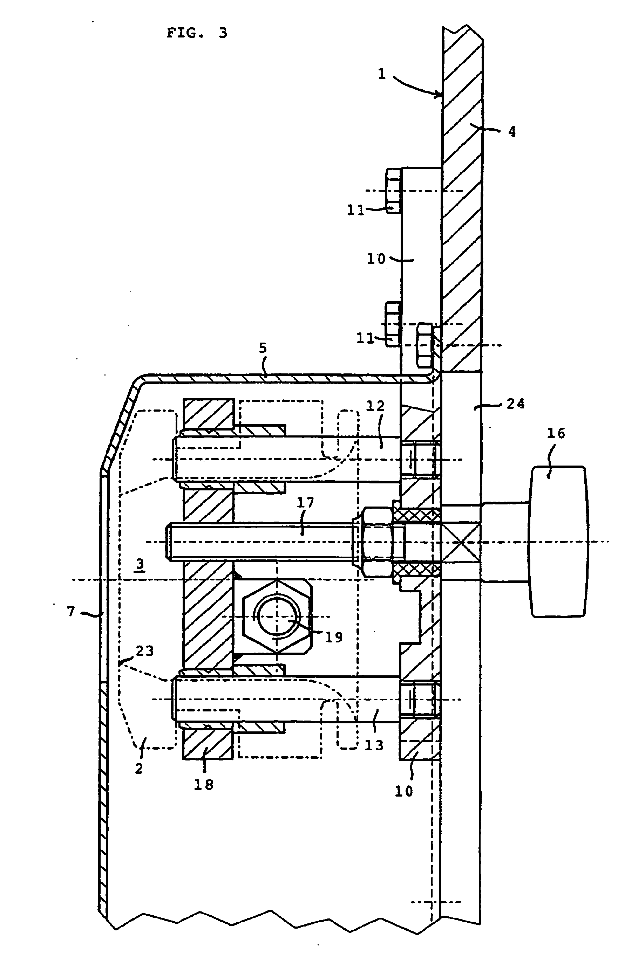

Anhand der Figuren 2 und 3 wird nun eine erfindungsgemässe Verschliessvorrichtung bzw. Darmbremsanordnung näher erläutert. Die Verschliessvorrichtung 1 weist dabei eine Seitenwand 4 auf, welche in Figur 2 in Draufsicht gezeigt ist und in Figur 3 in Schnittdarstellung. In der Seitenwand 4 ist eine Ausnehmung 24 angeordnet, in welcher die Darmbremse befestigt ist. Dazu ist ein nach innen versetzter Gehäusewandteil 5 vorgesehen, welcher eine Durchtrittsöffnung 7 aufweist, durch welche eine schlauchförmige Verpackung von der Füllmaschine her in die Verschliessvorrichtung hineingelangt. In Figur 3 links anschliessend an die Öffnung 7 folgt die feststehende Schere des Scherenpaares, welches bei Figur 1 erläutert worden ist. Die gefüllte schlauchförmige Verpakkung gelangt somit durch die Öffnung 7 hindurch in die Scheren. Figur 2 zeigt dabei durch die Öffnung 7 hindurch einen Blick in das Innere der Verschliessvorrichtung, indes ebenfalls ohne Darstellung des Scherenpaares. Bevor die schlauchförmige Verpackung in die Öffnung 7 des Gehäusewandteiles 5 gelangt, passiert sie die Öffnung 3 der Darmbremse 2, welche in Figur 2 ersichtlich ist und in Figur 3 nur mit strichpunktierten Linien angedeutet ist. Auf bekannte Weise bildet dabei das Füllrohrende des nicht dargestellten Füllrohres mit der Vorderkante bzw. Lippe 23 der Darmbremse einen engen Spalt für die schlauchförmige Verpackung, welcher diese beim Hindurchtreten abbremst. In Figur 2 ist ersichtlich, dass die Darmbremse 2 in einem Halteteil 18 angeordnet ist, welches gabelförmig mit zwei Zinken 8 und 9 und darin angeordneten Federteilen 14 und 15 die Darmbremse 2 in der in der Figur 2 gezeigten Arbeitsposition festhält. Die Darmbremse 2 kann auf einfache Weise durch ein Herausziehen in Richtung des Pfeiles A entnommen werden bzw. in Gegenrichtung zum Pfeil A wieder zwischen die Gabelzinken 8 und 9 in das Halteteil 18 eingesetzt werden. Eine entsprechende Formgebung der Darmbremse 2 an ihrem äusseren Umfang stellt dabei sicher, dass ein Einführen in die gabelförmige Halterung 18 nur auf die dargestellte Weise und nicht um 90° dazu verdreht erfolgen kann. Die einzelnen verwendeten Darmbremsen 2 unterscheiden sich dabei nur durch den Innendurchmesser ihrer Durchtrittsöffnung 3. Die an sich bekannte Verschiebung der Darmbremse in Längsrichtung des Füllrohres erfolgt in dem gezeigten Beispiel dadurch, dass das Halteteil 18 an zwei Bolzen 12 und 13 verschieblich gehalten ist und durch einen Gewindebolzen 17 dessen Drehung durch einen Bedienungsknopf 16 möglich ist, vor und zurück entlang der Bolzen 12, 13 verschoben werden kann, indem das Betätigungsteil 16 entsprechend gedreht wird. Auf bekannte Weise kann dadurch die Position der Lippe 23 der Darmbremse 2 in ihrer Position zum Füllrohrende verschoben werden, was den Grad der Bremswirkung beeinflusst. Die Bolzen 12, 13 und 17 sind an einer Platte 10 befestigt, die ihrerseits mit Schrauben 11 an der Seitenwand 4 der Verschliessvorrichtung befestigt ist. Natürlich ist die gezeigte Anordnung der Darmbremse an der Verschliessvorrichtung 1 nur als Beispiel zu verstehen und die in Gehäuse 5 befindliche gesamte Darmbremsanordnung mit der Halterung der Darmbremse 2 und deren Befestigung an der Verschliessvorrichtung 1 ist ebenfalls nur als Beispiel zu verstehen.

Gemäss der Erfindung ist nun ein Sensor vorgesehen, welcher in einer ersten Ausgestaltung lediglich feststellt, ob die Darmbremse 2 in der Halterung befindlich ist oder nicht. Im gezeigten Ausführungsbeispiel ist dazu ein Magnetfeldsensor 19 vorgesehen welcher auf einen Magneten 20 reagiert, der in der Darmbremse 2 angeordnet ist. Vom Magnetfeldsensor 19 führt eine elektrische Leitung 21, welche nur teilweise dargestellt ist, zu der nur angedeuteten Steuerung 25 der Verschliessvorrichtung. Diese kann anhand des Sensorsignals erkennen, ob die Darmbremse 2 in die Halterung 18 eingesetzt worden ist oder nicht. Befindet sich keine Darmbremse 2 in der Halterung, so wird durch das entsprechende Sensorsignal die Inbetriebnahme der Verschliessvorrichtung verhindert. Dies bewirkt einerseits, dass die schlauchförmige Verpakkung nicht ohne Bremsung in die Verschiessvorrichtung gelangt, was zu fehlerhaften Verpackungen führt, und verhindert andererseits, dass durch die Öffnung 7 ein Hineingreifen in die Scheren bei deren Betrieb möglich ist. Sobald die Darmbremse 2 in Position ist wird dies ohnehin durch die Öffnungsdimension der Darmbremse verunmöglicht.

Bei einer bevorzugten Ausführungsform kann der Sensor 19 ein anderer Sensor sein, welcher auch Informationen über die Art der Darmbremse, insbesondere von deren Innendurchmesser erkennen kann. Der Sensor kann damit diese Information ebenfalls an die Steuerung 25 liefern, welche feststellen kann, ob der gewählte Darmbremsinnendurchmesser zu dem gewählten Betriebsprogramm der Verschliessvorrichtung passt oder nicht. Auch dadurch lassen sich Fehlbedienungen, welche sich durch die Auswechselbarkeit der Darmbremse immer wieder ergeben, vermeiden. Der Sensor 19 kann dabei z.B. ein Sensor sein, welcher einen Strichcode an der Darmbremse 2 erkennen kann oder farbige Markierungen. Es können natürlich auch mehrere Magnetfeldsensoren vorhanden sein, welche dadurch das Vorhandensein von einem oder mehreren Magneten und dadurch eine Codierung der Darmbremse für ihre Eigenschaften feststellen können. Zur Feststellung des Vorhandenseins bzw. Nichtvorhandenseins kann auch ein Sensor verwendet werden, der keinen Sensorteil an der Darmbremse 2 benötigt.

Auch die Anordnung des Sensors an der Halterung ist natürlich nur als Beispiel zu verstehen. Der Sensor könnte auch separat von der Halterung an der Verschliessvorrichtung angeordnet sein und z.B. durch eine Ausnehmung in der Gehäusewandung 5 in den Anordnungsbereich der Darmbremse 2 die Erkennung durchführen. Z.B. kann der Sensor in so einem Fall (oder auch bei der obigen Ausführungsart) auch aus einer Lichtschranke bestehen, z.B. einer Reflektionslichtschranke, welche das Vorhandensein bzw. Nichtvorhandensein der Darmbremse 2 erkennt.

Die Darmbremsanordnung mit einer Halterung für die Darmbremse 2 und einem Sensor kann auch eine von der Verschliesseinrichtung separate Anordnung sein, welche an dieser befestigbar ist. Die Verschliessvorrichtung ist dann derart ausgestaltet, dass sie entsprechende Befestigungsmöglichkeiten für eine solche Darmbremsanordnung aufweist und die Steuerung 25 der Verschliessvorrichtung 1 ist so ausgestaltet, dass sie einen Anschluss für das Sensorsignal aufweist und dessen Signal auswerten kann.

## Patentansprüche

1. Verschliessvorrichtung (1) zur Bildung wurstförmiger Verpackungen, welche Vorrichtung zur Aufnahme einer Darmbremse (2) eingerichtet ist, **dadurch gekennzeichnet, dass** ein Sensormittel (19, 20) vorgesehen ist, durch welches das Vorhandensein bzw. Nichtvorhandensein der Darmbremse feststellbar ist und welches ein entsprechendes Signal bereitstellt, welches von der Steuereinrichtung (25) der Verschliessvorrichtung auswertbar ist, um einen Betrieb der Verschliessvorrichtung ohne Darmbremse zu unterdrücken, wobei das Sensormittel einen Sensor nur an der Verschliessvorrichtung umfasst, oder wobei das Sensormittel einen ersten Sensorteil (19) an der Verschliessvorrichtung und einen damit zusammenwirkenden zweiten Sensorteil (20) an der Darmbremse umfasst, und dass die Darmbremse (2) an einer Halterung (18) werkzeuglos befestigbar und lösbar ist und dass die Halterung den Sensor oder den ersten Sensorteil aufnimmt.

2. Verschliessvorrichtung nach Anspruch 1, **dadurch gekennzeichnet, dass** das Sensormittel zur Erkennung von Eigenschaften der Darmbremse, die in oder an derselben in maschinenlesbarer Form vorgesehen sind, ausgestaltet ist.

3. Darmbremsanordnung (10, 18) für eine Verschliessvorrichtung (1) zur Bildung wurstförmiger Verpackungen, welche Anordnung eine Halterung (18) und mindestens eine in diese werkzeuglos einsetzbare und aus dieser werkzeuglos entnehmbare Darmbremse (2) umfasst, wobei die Anordnung einen Sensor (19) an der Halterung (18) umfasst, durch welchen das Vorhandensein bzw. Nichtvorhandensein der Darmbremse feststellbar ist und welcher ein entsprechendes Signal bereitstellt, welches zur Zuführung an die Steuereinrichtung der Verschliessvorrichtung bestimmt ist.

4. Verschliessvorrichtung zur Bildung wurstförmiger Verpackungen, welche zur Kombination mit einer Darmbremsanordnung nach Anspruch 3 bestimmt und zum Anbau der Halterung und zur Entgegennahme des Sensorsignals ausgestaltet ist.

## Claims

1. A closure device (1) for the formation of sausage shaped packages, being arranged for the accommodation of a casing brake (2), **characterized in that** a sensor arrangement (19, 20) is provided with which the presence or the absence of the casing brake is detectable and which provides a corresponding signal being evaluable by a controller (25) of the closure device in order to prevent the operation of the closure device without the casing brake, wherein the sensor arrangement comprises a sensor only on the closure device, or wherein the sensor arrangement comprises a first sensor part (19) on the closure device and a therewith interacting second sensor part (20) on the casing brake, and that the casing brake (2) can be fixed and removed from a holding device (18) without the use of tools and the holding device (18) accommodates the sensor or the first sensor part.

2. The closure device of claim 1, **characterized in that** the sensor arrangement is adapted for the detection of the features of the casing brake, which are provided in machine-readable form within or on the casing brake.

3. Casing brake arrangement (10, 18) for a closure device (1) for the formation of sausage shaped packages, the arrangement comprising a holding device (18) and at least one casing brake (2) which can be inserted therein without the use of tools and removed without the use of tools, wherein the arrangement provides a sensor on the holding device (18), with which the presence or the absence of the casing brake is detectable and which provides a corresponding signal being designed for the supply to the controller of the closure device.

4. Closure device for the formation of sausage shaped packages, which is designed for the combination with a casing brake arrangement according to claim 3 and arranged for mounting the holding device and for the reception of the sensor signal.

## Revendications

1. Dispositif de fermeture (1) pour former des emballages en forme de saucisse, lequel dispositif est conçu pour loger un frein pour boyau (2), **caractérisé en ce qu'**il est prévu un moyen de détection (19, 20) par lequel la présence ou la non-présence du frein pour boyau peut être constatée et qui fournit un signal approprié, lequel peut être analysé par le système de commande (25) du dispositif de fermeture pour supprimer un fonctionnement du dispositif de fermeture sans frein pour boyau, le moyen de détection comprenant un capteur seulement sur le dispositif de fermeture, ou le moyen de détection comprenant une première partie de capteur (19) sur le dispositif de fermeture et une seconde partie de capteur (20) coopérant avec la première sur le frein pour boyau, et **en ce que** le frein pour boyau (2) peut être fixé et détaché sans outil sur un support (18) et **en ce que** le support reçoit le capteur ou la première partie de capteur.

2. Dispositif de fermeture selon la revendication 1, **caractérisé en ce que** le moyen de détection est conçu pour identifier des propriétés du frein pour boyau qui sont prévues dans ou sur le frein pour boyau dans une forme lisible à la machine.

3. Organe de freinage pour boyau (10, 18) pour un dispositif de fermeture (1) pour former des emballages en forme de saucisse, lequel organe comprend un support (18) et au moins un frein pour boyau (2) pouvant être inséré sans outil dans ce support et pouvant en être sorti sans outil, l'organe comprenant un capteur (19) sur le support (18), par lequel la présence ou la non-présence du frein pour boyau peut être constatée et qui fournit un signal approprié, lequel est destiné à être amené au système de commande du dispositif de fermeture.

4. Dispositif de fermeture pour former des emballages en forme de saucisse, qui est destiné à une combinaison avec un organe de freinage pour boyau selon la revendication 3 et est conçu pour le montage du support et pour la réception du signal de détection.
